Europäisches Patentamt

European Patent Office

Office européen des brevets

(11) Publication number: **0 159 634**
**B1**

(12) **EUROPEAN PATENT SPECIFICATION**

(45) Date of publication of patent specification: **18.07.90**

(51) Int. Cl.⁵: **A 01 M 23/00,** A 01 M 17/00

(21) Application number: **85104462.8**

(22) Date of filing: **12.04.85**

(54) Apparatus for automaticallly trapping and processing rats or the like.

(30) Priority: **25.04.84 JP 59868/84**

(43) Date of publication of application:
**30.10.85 Bulletin 85/44**

(45) Publication of the grant of the patent:
**18.07.90 Bulletin 90/29**

(84) Designated Contracting States:
**DE FR GB NL**

(56) References cited:
**WO-A-83/01724**
**US-A-3 548 447**
**US-A-3 900 983**
**US-A-4 062 142**

(73) Proprietor: **IKARI CORPORATION**
**23-7, Shinjuku 3-chome**
**Shinjuku-ku Tokyo 160 (JP)**

(72) Inventor: **Kurosawa, Toshishige**
**29-16, Matsubara 1-chome**
**Setagaya-ku Tokyo 156 (JP)**
Inventor: **Ishisaka, Satoru**
**945-6, Miyazawacho Seya-ku**
**Yokohama-shi Kanagawa-ken 246 (JP)**
Inventor: **Tanaka, Masayuki**
**4-4, Tokiwadaira 2-chome**
**Matsudo City Chiba-ken 270 (JP)**
Inventor: **Ishiwatari, Takanobu**
**24-13, Shiohama 2-chome Kawasaki-ku**
**Kawasaki-shi Kanagawa-ken 210 (JP)**
Inventor: **Sato, Takeo**
**2-5-206, Akitsu 2-chome**
**Narashino-shi Chiba-ken 275 (JP)**
Inventor: **Terauchi, Kunio**
**372-9-3, Kisomachi**
**Machida-shi Tokyo 194 (JP)**

(74) Representative: **Goddar, Heinz J., Dr. et al**
**FORRESTER & BOEHMERT Widenmayerstrasse**
**4/I**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to an apparatus for trapping and processing small animals such as rats or the like according to the preamble of claim 1.

Apparatusses for trapping and processing small animals are known from US-A-3 900 983, WO-A-8301724, US-A-3 548 447 and US-A-4 062 142.

Furthermore the applicant has developed an apparatus for trapping and processing small animals such as rats by delivering a rat with a carrier on an air flow to prescribed processing · device, killing the rat in that device and packing the killed rat in a vinyl bag. This apparatus employs a suction fan for generating an air flow in a tube for trapping and delivering rats. If the tube is installed in a wide area, then the suction fan is required to have a large suction capability, with the result that the apparatus will be expensive to construct and large in size. Since trapped rats as they are conveyed with carriers on an air flow in the tube are of various sizes, there will often be formed clearances between the rats and the inner wall of the tube, and the air flow will be of a reduced conveying capability. The carrier which is soft, spherical in shape, and of substantially the same diameter as the inside diameter of the tube, is placed in the tube when a rat is trapped. The carrier then pushes the trapped rat while being conveyed on the air flow to deliver the rat to the processing position. Therefore, it is necessary to provide a means for supplying the carriers into the tube. Inasmuch as the carriers used are of a yieldable material such as sponge, rather than a rigid material, they cannot be supplied by an automatic supply device in the field of automatic machines. The prior apparatus operates on the premise that rats will enter the trapping tube. Although the rats have a tendency to enter a small passage such as a tube, the reliance on such an animal behaviour is a negative trapping method, and a periodical supply of rat-attracting chemicals into the tube would be effective in positively trapping rats.

Therefore, it is the object of the present invention to provide a control means effective in conveying small animals in a wide range of sizes with a small suction capability.

This object is achieved by an apparatus with the features of claim 1. Preferred embodiments of the invention are subject of claims 2 to 4.

According to the present invention an air flow is supplied only in a tube which a rat has entered, among a plurality of trapping tubes, and the other tubes are supplied with no air flow. As a result, the air flow passes only in the tube which the rat has entered and a rat conveying tube. A processing device may therefore be of a small suction capability, and the air flow produced thereby can effectively be utilised.

According to a preferred embodiment of the invention a number of carriers are stacked and stored in each of a plurality of storage tubes. The lowermost carrier in each of the storage tubes can be urged and guided toward a supply position by the air flow produced at the time of conveying a trapped rat. Since the carriers in the storage tube are successively fed to the supply position by the air flow produced in the trapping tube, there are required no special drive source and feed mechanism for delivering the carriers, with the result that the carrier supply device is simple in construction. As many carriers can be stored in each storage tube, a continuous rat trapping and conveying capability will be ensured for a long period of time.

According to a further preferred embodiment of the invention a small amount of a rat-attracting chemical is supplied with an air flow each time a rat is trapped. The rat-attracting chemical in a container is automatically supplied in a small quantity into the trapping tube under the vacuum of an air flow produced when the trapped rat is conveyed. With this arrangement, the air flow produced to convey the trapped rat causes an air stream to flow upwardly from the bottom in the container, thus blowing up the rat-attracting chemical in the container. Therefore, the rat-attracting chemical is supplied on the air stream into the trapping tube each time a rat is trapped. This makes it possible to provide automatic attraction of rats the trapping tube. Where the rat-attracting chemical contains a disinfectant and a steriliser, it can disinfect and sterilise the interior of the trapping tube. If the rat-attracting chemical is a liquid, it remains as effective because of it ability to vaporise through air bubbles generated.

The above and other objects, features and advantages of the present invention will become more apparent from the following description when taken in conjunction with the accompanying drawings in which a preferred embodiment of the present invention is shown by way of illustrative example. In the drawings:

Fig. 1 is a side elevational view of an entire automatic trapping and processing apparatus according to the present invention;

Fig. 2 is a fragmentary horizontal cross-sectional view of a shutter assembly;

Fig. 3 is a circuit diagram of a pneumatic piping arrangement;

Fig. 4 is a circuit diagram of an electric control circuit;

Fig. 5 is a front elevational view of a carrier supply device;

Fig. 6 is a plan view of a pusher; and

Fig. 7 is an enlarged cross-sectional view of a device for supplying a rat-attracting chemical.

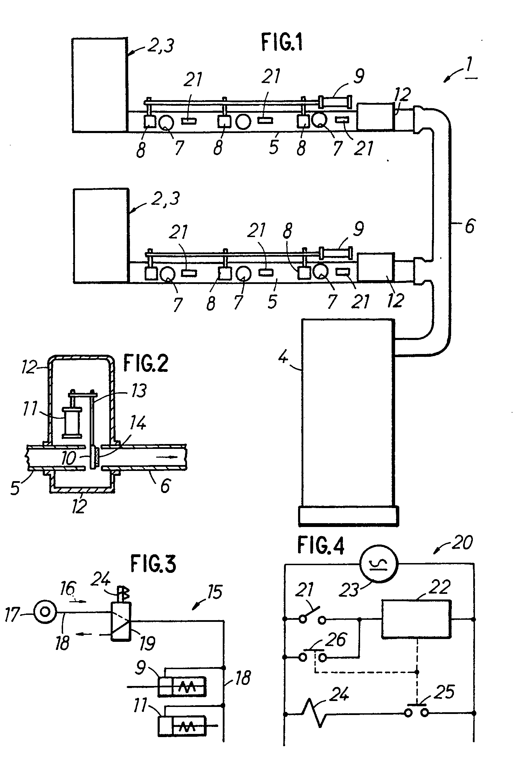

FIG. 1 illustrates an apparatus 1 for automatically trapping and processing rats or the like.

The apparatus 1 essentially comprises devices 2 for supplying a rat-attracting chemical, devices 3 for supplying carriers, and a common processing device 4. The devices 2, 3 are associated respectively with a plurality of trapping tubes 5. The processing device 4 is connected to an end of a conveying tube 6.

The trapping tubes 5 are divided from the conveying tube 6. Each of the trapping tubes 5 has a plurality of entry openings 7 defined in a side wall thereof. The entry openings 7 can be opened and closed by doors 8 which are driven to move horizontally by a common air cylinder 9 serving as a driver means.

FIG. 2 shows a shutter 10 disposed between each of the tubes 5 and the tube 6 and an air cylinder 11 serving as a driver means for driving the shutter 10. The tubes 5, 6 are connected with each other through the shutter 10 in a closed casing 12. The shutter 10 is connected by a connector 13 to the air cylinder II. A sponge body 14 is bonded to the surface of the shutter 10 facing the tube 6 for allowing the shutter 10 to be fitted intimately in the opening of the tube 6.

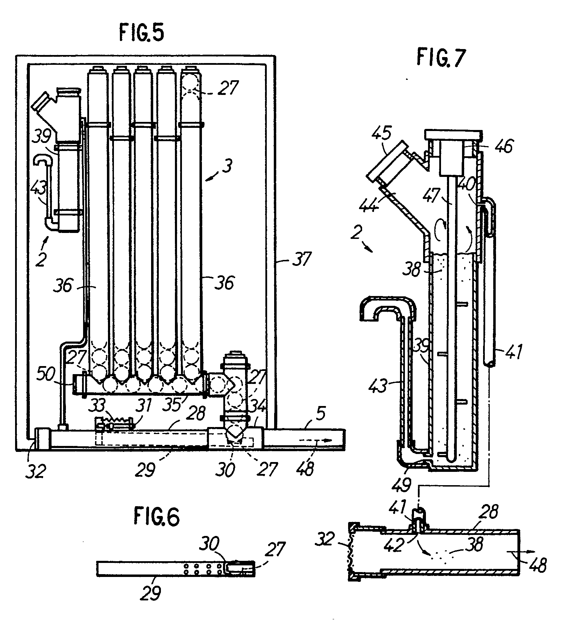

FIG. 3 shows a piping arrangement 15 for the air cylinders 9, 11. A source 17 of air 16 under pressure is connected by a pipe 18 through a three-port solenoid-operated directional control valve 19 to the air cylinders 9, 11 and an air cylinder 31 (FIG. 5), described later. In the illustrated embodiment, each of the air cylinders 9, 10 comprises a spring-biased single-acting cylinder.

FIG. 4 illustrates an electric control circuit 20 associated with each of the tubes 5. A sensor 21 for detecting a rat entry and a timer relay 22 which will be de-energized with a time delay are connected in series to each other and also connected to a power supply 23. The directional control valve 19 has a solenoid 24 connected to the power supply 23. A normally-closed contact 25 actuatable by the timer relay 22 is connected in series to the solenoid 24 and also connected to the power supply 23. A contact 26 for holding the timer relay 22 is connected parallel to the sensor 21. The sensor 21 is disposed adjacent to each of the entry openings 7 in each tube 5. The sensor 21 will be energized when a small animal such as a rat enters the tube 5 through the entry opening 7 adjacent to that sensor 21.

FIGS. 5 and 6 show the device 3 for supplying carriers 27 into the tubes 5, 6. The device 3 has a tube 28 disposed in a housing 37 and connected to the rear end of each tube 5 through a T-joint tube 34. In the tube 28, there is disposed a pusher 29 having a receiver 30 and reciprocably movable by the cylinder 31 of the double-acting type mounted on an upper surface of the tube 28 and an auxiliary tension spring 33. The pusher 29 has a number of vent holes defined in its upper surface. A filter 32 is detachably mounted in the rear opening of the tube 28. The T-joint tube 34 is connected to a T-shaped supply tube 35 including a horizontal tube portion coupled to a number of vertical parallel storage tubes 36 disposed in the housing 37. A number of carriers 27 are stacked and stored in each of the storage tubes 36. The carriers 27 have a diameter substantially equal to the inside diameters of the tubes 5, 6, and are made of a soft sponge material. A filter 50 is mounted on an end of the supply tube 35.

FIG. 7 shows the device 2 positioned in the housing 37 for supplying a rat-attracting chemical 38 at a constant rate into the tube 28. The rat-attracting chemical 38 which is in the form of powder is stored in a container 39. The container 39 has an upper supply port 40 joined through a supply tube 41 to a supply port 42 in the tube 28. The container 39 includes a bottom portion having an air inlet port 49 connected to an air inlet tube 43 extending vertically upwardly. The container 39 includes an upper charging port 44 projecting laterally and closed by a cover 45. A drive source 46 is mounted above the container 39 and connected to a vibrating rod 47 extending in the container 39. The drive source 46 imparts rotary, vibratory, or reciprocating motion to the vibrating rod 47.

The processing device 4 includes therein a suction fan and an automatic packing machine for killing conveyed rats and automatically packing the killed rats as in vinyl bags.

Operation of the automatic trapping and processing apparatus 1 is as follows:

In a standby condition, the directional control valve 19 is shifted to the solid-line position as shown in FIG. 3, and the air cylinders 9, 11 are in the returned position under the bias of their springs. The entry openings 7 are uncovered by the covers 8 and the openings of the conveying tube 6 are all closed by the shutters 10. The pusher 29 is displaced to the right (FIG. 5) or in the advanced position. When a rat enters an entry opening 7 and approaches the sensor 21, the sensor 21 is energized to enable the timer relay 22 to close the holding contact 26 and simultaneously close the contact 25 to energize the solenoid 24. The directional control valve 19 is now shifted to the broken-line position (FIG. 3) to allow air 16 under pressure to flow through the pipe 18 into the air cylinders 9, 11, 31. The air cylinder 9 associated with the tube 5 which the rat has entered moves the covers 8 to close the entry openings 7, thus trapping the rat in the tube 5. The air cylinder 11 associated with the tube 5 which the rat has entered retracts the shutter 10 to uncover the opening of the conveying tube 6. At this time, only the air cylinders 9, 11 which are associated with the tube 5 which the rat has entered are operated, and the other tubes 5 remain in the standby condition. The air cylinder 31 retracts the pusher 29 to receive one carrier 27 in the receiver 30. Then, the pusher 29 is moved forward under the force of the tension spring 33 to automatically supply the carrier 27 into the trapping tube 5.

The processing device 4 is responsive to a detected signal from the sensor 21 to start the suction fan therein for producing an air flow 48 in the tube 6 in a conveying direction. The suction capability required by the processing 4 needs only to be large enough to produce the air flow 48 necessary to convey a rat in one tube 5 and the common tube 6.

When the air flow 48 is produced in the tube 5 in which the rat is trapped, the carrier 27 is forced out of the receiver 30 and moved on the air flow 48 through the tubes 5, 6 while pushing the trapped rat until they enter the processing device 4. Even if the trapped rat is small in size, the carrier 27 behind the rat substantially fully closes the inner space in the tubes 5, 6 while being elastically deformed. Therefore, the trapped rat can reliably and efficiently be carried by the carrier 27 through the tubes 5, 6 to the processing position in the processing device 4.

The air flow 48 is also generated in the T-joint tube 34, the supply tube 35, and the storage tube 36. The carriers 27 in the storage tubes 36 are drawn by the air flow 48 toward the lower end of the T-joint tube 34, with the lowermost carrier 27 contacting the upper surface of the pusher 29. Accordingly, no special drive source is required for successively supplying the carriers 27.

The air flow 48 also acts in the supply tube 41 to produce a vacuum therein. Therefore, ambient air flows through the air inlet tube 43 into the container 39 to blow up the rat-attracting chemical 38, which is supplied in a small quantity through the supply 41 and the tube 28 into the trapping tube 5 and the conveying tube 6. The rat-attracting chemical 38 is thus distributed in the trapping tube 5 in readiness for a next cycle of rat trapping operation. The rat-attracting chemical 38 may be mixed with a sterilizer and a disinfectant to sterilize and disinfect the interior of the tubes 5, 6. Where the rat-attracting chemical 38 is in the form of powder, it can lubricate the interior of the tubes 5, 6.

If there is an air passage formed in the rat-attracting chemical 38, then an upper layer of the rat-attracting chemical 38 would not be stirred upwardly, failing to supply a required amount of the rat-attracting chemical 38. To prevent this difficulty, the drive source 46 is actuated to rotate, vibrate, or reciprocate the rod 47 to eliminate the air passage formed in the rat-attracting chemical 38. It is preferable to agitate the rat-attracting chemical 38 periodically each time the sensor 21 is energized or after one cycle of operation.

A given period of time after the above cycle of operation has been completed, the timer relay 22 opens the contact 25 and the holding contact 26. The directional control valve 19 now returns to the original position, allowing the air cylinders 9, 11 to return automatically to their standby position under the bias of the springs. The processing device 4 kills the rat by suffocating it as through introduction of a gas, and packs the killed rat and the carrier 27 in a closed vinyl bag, which will thereafter be discharged into a container.

While the trapping tubes 5 are placed on a floor, they may be installed in the ceiling. Bendable vinyl tubes may be connected to the entry openings 7 and directed so as to be open at rat paths. With this arrangement, since a rat tends to enter a hole, it will move through the vinyl tube and then through the entry opening coupled thereto into the trapping tube.

**Claims**

1. An apparatus for automatically trapping and processing small animals, comprising trappings means and a processing device, characterized by
   a) a plurality of trapping tubes (5) each having a plurality of entry openings (7) defined therein for trapping a small animal therein;
   b) a common conveying tube (6) coupled to said trapping tubes (5);
   c) means coupled to said common conveying tube (6) for producing an air flow to convey the trapped small animal through said trapping and conveying tubes (5, 6) to the processing device (4);
   (d) a plurality of covers (8) disposed in each of said trapping tubes (5) for opening and closing said entry openings (7);
   (e) first drive means (9) for driving said covers (8);
   (f) a plurality of sensors (21) disposed in each of said trapping tubes (5) adjacent to said entry openings (7), respectively, for sensing entry of the small animal into the trapping tube (5) through the entry openings (7);
   (g) a plurality of shutters (10) disposed between said trapping tubes (5) and said conveying tube (6);
   (h) second drive means (11) for driving said shutters (10), and
   (i) a control circuit (20) responsive to an input signal from one of said sensors (21) for actuating said first drive means (9) to move the cover (8) to close the entry opening (7) associated with said one of the sensors (21) and for actuating said second drive means (11) to open the shutter (10) associated with the trapping tube (5) having said one of the sensors (21).

2. An apparatus according to claim 1, characterized in that said control circuit (20) is preset to close all of said shutters (10) and responsive to the input signal from said one of the sensors (21) for actuating said second drive means (11) to open the shutter (10) associated with the trapping tube (5) having said one of the sensors (21).

3. An apparatus according to claim 1, characterized by a device (3) coupled to an end of each of said trapping tubes (5) for supplying carriers (27) into the trapping tubes (5), said device (3) including a tube (28) connected to said trapping tube (5), a pusher (29) movably disposed in said tube (28) and having a receiver (30), a drive source (31) coupled to said pusher (29) for moving said pusher (29) in said tube (28), a supply tube (35) connected to said tube (28) and disposed upwardly of said receiver (30) of said pusher (29), and a plurality of storage tubes (36) connected to said supply tube (28) and each storing a plurality of soft spherical carriers (27).

4. An apparatus according to claim 1, characterized by a device (2) coupled to an end of each of said trapping tubes (5) for supplying an attracting chemical (38), said device (2) including a container (39) for containing the attracting chemical (38), said container (39) having an air inlet port (49) adjacent to a bottom thereof and a supply port (40) in an upper portion thereof, and a supply tube (41) by which said supply port (40) is coupled to a supply port (42) of said tube (28).

## Patentansprüche

1. Vorrichtung zum automatischen Fangen und Behandeln von kleinen Tieren, mit Fangmitteln und einer Behandlungseinrichtung, gekennzeichnet durch

a) mehrere Fangröhren (5), jeweils mit mehreren Eingangsöffnungen (7), welche darin zum Fangen eines kleinen Tieres darin festgelegt sind;

b) eine gemeinsame Beförderungsröhre (6), die an die Fangröhre (5) angeschlossen ist;

c) Mittel, die an die gemeinsame Beförderungsröhre (6) angeschlossen sind, zum Erzeugen eines Luftstroms, um das gefangene kleine Tier durch die Fang- und Beförderungsröhren (5,6) zu der Behandlungseinrichtung (4) zu befördern;

d) mehrere Abdeckungen (8), die in jeder der Fangröhren (5) angeordnet sind, um die Eingangsöffnungen (7) zu öffnen und zu schließen;

e) erste Betätigungsmittel (9) zum Betätigen der Abdeckungen (8);

f) mehrere Sensoren (21), die in jeder der Fangröhren (5) jeweils in der Nachbarschaft der Eingangsöffnungen (7) angeordnet sind, zum Erfassen des Eingangs eines kleinen Tieres in die Fangröhre (5) durch die Eingangsöffnungen (7);

g) mehrere Schließer (10), die zwischen den Fangröhren (5) und der Beförderungsröhre (6) angeordnet sind;

h) zweite Betätigungsmittel (11) zum Betätigen des Schließers (10); und

i) eine Überwachungsschaltung (20), die auf ein Eingangssignal von einem der Sensoren (21) zum Aktivieren der ersten Betätigungsmittel (9) reagiert, um die Abdeckung (8) zu bewegen, um die Eingangsöffnung (7), die dem einen der Sensoren (21) zugeordnet ist, zu schließen, und zum Aktivieren der zweiten Betätigungsmittel (11), um den Schließer (10), der der Fangröhre (5) mit dem einen der Sensoren (21) zugeordnet ist, zu öffnen.

2. Vorrichtung nach Anspruch 1, dadurch gekennzeichnet, daß die Überwachungsschaltung (20) voreingestellt ist, um alle Schließer (10) zu schließen, und auf das Eingangssignal von dem einen der Sensoren (21) reagiert, um die zweiten Betätigungsmittel (11) zu aktivieren, um den Schließer (10), der der Fangröhre (5) mit dem einen der Sensoren (21) zugeordnet ist, zu öffnen.

3. Vorrichtung nach Anspruch 1, gekennzeichnet durch eine Einrichtung (3), die an ein Ende einer jeden Fangröhre (5) angeschlossen ist, zum Abgeben von Förderern (27) in die Fangröhren (5), wobei die Einrichtung (3) folgendes umfaßt: eine Röhre (28), die mit der Fangröhre (5) verbunden ist, einen Schieber (29), der beweglich in der Röhre (28) angeordnet ist und einen Aufnehmer (30) aufweist, eine Betätigungsquelle (31), die an den Schieber (29) angeschlossen ist, zum Bewegen des Schiebers (29) in der Röhre (28), eine Einführröhre (35), die mit der Röhre (28) verbunden ist und oberhalb des Aufnehmers (30) des Schiebers (29) angeordnet ist, und mehrere Speicherröhren (36), die mit der Einführröhre (28) verbunden sind und jeweils mehrere weiche sphärische Förderer (27) bevorraten.

4. Vorrichtung nach Anspruch 1, gekennzeichnet durch eine Einrichtung (2), die an ein Ende einer jeden Fangröhre (5) angeschlossen ist, zum Einführen einer Lock-Chemikalie (38). wobei die Einrichtung (2) einen Behälter (39) zum Bevorraten der Lock-Chemikalie (38) umfaßt und der Behälter (39) einen ersten Lufteinlaß (49) in der Nachbarschaft seines Bodens und einen Zuführauslaß (40) in seinem oberen Teil und eine Zuführröhre (41) aufweist, durch welche der Zuführauslaß (40) an einen Zuführeinlaß (42) der Röhre (28) angeschlossen ist.

## Revendications

1. Appareil de capture et de traitement automatique de petits animaux, comprenant des moyens de capture et un dispositif de traitement, caractérisé par

a) une pluralité de tubes de capture (5) comportant à l'intérieur de chacun une pluralité d'orifices d'entrée (7) pour capturer en son sein un petit animal;

b) un tube commun d'acheminement (6) couplé auxdits tubes de capture (5);

c) des moyens couplés audit tube commun d'acheminement (6) pour produire un courant d'air et acheminer les petits animaux capturés, à travers lesdits tubes de capture et d'acheminement (5, 6), au dispositif de traitement (4);

(d) une pluralité de couvercles (8) disposés dans chacun desdits tubes de capture (5), pour ouvrir et fermer lesdits orifices d'entrée (7);

(e) des premiers moyens d'entraînement (9) pour entraîner lesdits couvercles (8);

(f) une pluralité de capteurs (21) respectivement disposés dans chacun desdits tubes de capture (5), adjacents auxdits orifices d'entrée (7), pour détecter l'entrée des petits animaux dans le tube de capture (5), à travers les orifice d'entrée (7);

(g) une pluralité d'organe d'obturation (10) disposés entre lesdits tubes de capture (5) et ledit tube d'acheminement (6);

(h) des seconds moyens d'entraînement (11) pour entraîner lesdits organes d'obturation (10), et

(i) un circuit de commande (20) réagissant à un signal d'entrée provenant de l'un desdits capteurs (21), afin d'actionner lesdits premiers moyens d'entraînement (9), et déplacer le couvercle (8), afin de fermer l'orifice d'entrée (7) associé à l'un des capteurs (21), et actionner lesdits seconds moyens d'actionnement (1) pour ouvrir l'organe d'obturation (10) associé au tube de capture (5) présentant ledit capteur (21) concerné.

2. Appareil selon la revendication 1, caractérisé en ce que ledit circuit de commande (20) est remis à l'état initial, afin de fermer la totalité desdits organes d'obturation (10) et est sensible au signal d'entrée provenant dudit capteur (21) concerné, afin d'actionner lesdits seconds moyens d'entraînement (11) pour ouvrir l'organe d'obturation (10) associé au tube de capture (5) présentant ledit capteur (21) concerné.

3. Appareil selon la revendication 1, caractérisé par un dispositif (3) couplé à une extrémité de chacun desdits tubes de capture (3), pour amener lesdits transporteurs (27) dans les tubes de capture (3), ledit dispositif (3) comprenant un tube (28) raccordé audit tube de capture (5), un poussoir (29) disposé déplaçable dans ledit tube (28) et comportant un réceptacle (30), une source d'entraînement (31) reliée audit poussoir (29), afin de déplacer ledit poussoir (29) dans ledit tube (28), un tube d'alimentation (35) relié audit tube (28) et disposé en haut dudit réceptacle (30) dudit poussoir (29), et une pluralité de tubes de stockage (36) reliés audit tube de capture (28) et emmagasinant chacun une pluralité de transporteurs (27) mous et de forme sphérique.

4. Appareil selon la revendication 1, caractérisé par un dispositif (2) couplé à une extrémité de chacun desdits tubes (5) pour réaliser l'alimentation en un produit chimique attractif (38), ledit dispositif (2) comprenant un récipient (39) destiné à contenir le produit chimique attractif (38), ledit récipient (39) présentant un orifice d'entrée d'air (49) adjacent à un fond du récipient et un orifice d'alimentation (40) ménagé dans une partie supérieure du récipient, et un tube d'alimentation (41) au moyen duquel ledit orifice d'alimentation (40) est relié à l'orifice d'alimentation (42) dudit tube (28).

FIG.1

FIG.2

FIG.3

FIG.4

FIG.5

FIG.7

FIG.6